# EUROPEAN PATENT APPLICATION

(11) **EP 1 338 325 A1**
(43) Date of publication of application: **27.08.2003**
(21) Application number: 00963055.9
(22) Date of filing: 02.10.2000
(51) Int. Cl.: B01D 53/26, B01D 53/22

(54) **VAPOR MOVEMENT CONTROL DEVICE**

(71) Applicant: Mizobe, Kunitaka, Fukuoka-shi, Fukuoka 814-0132 (JP)
(72) Inventor: Mizobe, Kunitaka, Fukuoka-shi, Fukuoka 814-0132 (JP)
(74) Representative: Haley, Stephen
(86) International application number: JP0006855
(87) International publication number: WO02028511

(57) **Abstract**

The invention relates to a vapor movement control technique small in size, capable of fine-adjusting a separation efficiency by the revolution speed of a motor, less in vibration, and capable of saving energy remarkably by the utilization of a heating phenomenon of a rotary machine such as a motor. This technique is characterized in that a first closed space to be humidity-controlled is allowed to communicate with a second closed space formed inside a casing through a first ventilation passage, a tubular film body is pivotally supported on a separation film rotating body disposed, in the second closed space, on the same rotating axis as the film body, a small chamber and the innermost space are formed in the separation film rotating body, a sirocco fan is installed inside these spaces, centrifugal fins are provided on the side surface thereof, a heat transfer member transferring heat from the motor of the separation film rotating body to the separation film rotating body is provided, the innermost space of the separation film rotating body is allowed to communicate with the first closed space through the second ventilation passage formed inside a rotating shaft, and the second closed space is allowed to communicate with the outside air through an outside air ventilation passage.

## Description

### TECHNICAL FIELD

The present invention relates to a vapor movement control device (a humidity conditioning device) which is used as the humidity conditioning device or the like by controlling a moving direction of the vapor on the basis of a film body having an air permeability and a humidity permeability and an arrangement thereof.

### BACKGROUND ART

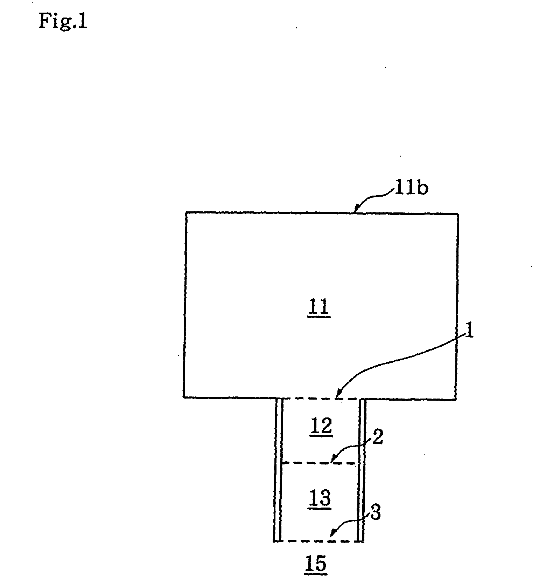

In conventional, as shown in Fig. 1, there has been known a vapor movement control device in which a plurality of small chambers 12 and 13 sectioned by film bodies 1, 2 and 3 having an air permeability and a humidity permeability are formed between a closed space 11 formed inside a box body 11b and the outside air 15.

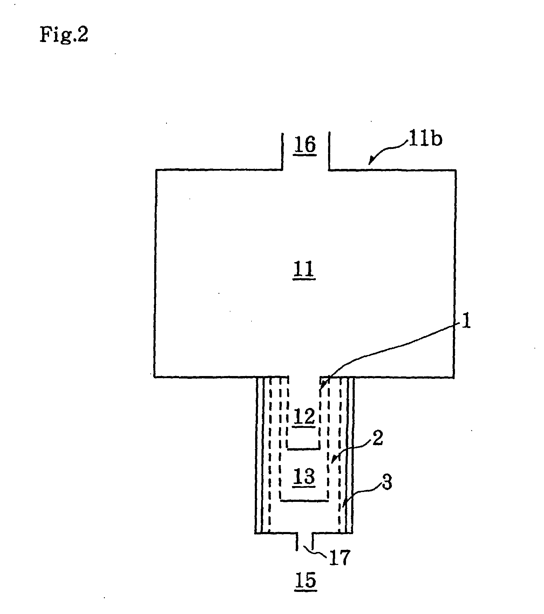

Further, schematically drawing for the purpose of describing a basic principle, as a module using a hollow fiber membrane or the like, there has been known a separation module having a plurality of small chambers 12 and 13 sectioned by the tubular film bodies 1, 2 and 3 having different diameters, as shown in Fig. 2.

As a driving source in the vapor movement control device shown in Fig. 1, a humidity conditioning in the closed space 11 is carried out by aligning a moving amount of the vapor with a fluctuation cycle of the outside air 15 in each of the small chambers 12 and 13 with utilizing permeability characteristics of the air and the vapor in a separating course, and determining a volumetric capacity of the closed space 11 and a volumetric capacity of each of the small chambers 12 and 13.

Further, in a module structure as shown in Fig. 2, a hollow fiber membrane is used so that a limit is hard to be generated on a surface area in the film bodies 1, 2 and 3 in the separating course, however, in this case, it is necessary to pressure feed a separated gas body by a pump, and it is a necessary condition that the pump is independently provided.

The vapor movement control device having the basic structure as shown in Fig. 1 is advantageous in the case that the area of the film bodies 1, 2 and 3 is set small with respect to the volumetric capacity of the closed space 11 to be humidity-controlled, for the purpose of regulating a temperature. Accordingly, a limit is generated in the closed space 11 (the volumetric capacity) capable of conditioning the humidity. Further, since the condition for the humidity conditioning requires a temperature fluctuation of the outside air 15, and a periodic fluctuation of the temperature is used together with a pressure fluctuation of the closed space 11 utilizing a rapid increase of the temperature, a limit is generated in the humidity conditioning time and a time capable of controlling the movement of the vapor.

Since the basis principle as shown in Fig. 2 only makes good use of an ultra-separating operation forming a limit for simply carrying out a separation by the hollow fiber membrane, and is inferior to the temperature regulating capacity before and after the film body as shown in Fig. 1, a concentration gradient making good use of the temperature fluctuation is formed by pressure feeding from a ventilation passage 16 or sucking from a ventilation passage 17 by a pump or the like which is independently provided in an outer portion, and making good use of an adiabatic cooling phenomenon or an adiabatic expanding phenomenon which is generated at a time of this pressure fluctuation.

Further, in the module shown in Fig. 2, since the motor is used for the driving source mentioned above for the purpose of achieving the function, and this heat generating phenomenon is ignored, there is a problem that a problem particularly tends to be generated in downsizing of the device for keeping temperature.

Further, there is a problem that pipes and the like are complex, and a malfunction tends to be generated in the case that impurities are mixed in joining portions thereof, and in the case of using a compressor, a vibration can not be ignored.

The present invention is made for the purpose of solving the conventional problems mentioned above, and an object of the present invention is to provide a vapor movement control device which is small in size, is capable of fine-adjusting a separation efficiency by the revolution speed of amotor, is less in vibration, and is capable of saving energy remarkably by the utilization of a heating phenomenon of a rotary machine such as a motor.

### DISCLOSURE OF THE INVENTION

In order to achieve the object mentioned above, a vapor movement control device in accordance with the present invention is structured such that:
a first closed space to be humidity-controlled and a second closed space formed inside a casing are communicated through a first ventilation passage;
a separation film rotating body in which a plurality of tubular film bodies formed by film bodies having an air permeability and a humidity permeability and having different diameters are arranged on the same rotating axis is pivotally supported in the second closed space;
a plurality of small chambers and innermost spaces sectioned by the respective tubular film bodies are formed in the separation film rotating body, a sirocco fan promoting generation of a centrifugal force of the inward existing gas is mounted, and centrifugal fins are provided on the side surface thereof;
a heat transfer member transferring heat from the motor of the separation film rotating body to the separation film rotating body is provided;
the innermost space of the separation film rotating body is communicated with the first closed space through the second ventilation passage formed inside the rotating shaft; and
the second closed space is communicated with the outside air through an outside air ventilation passage.

A description will be given of a background art of the vapor movement control device in accordance with the present invention.

In the conventional vapor movement control device shown in Fig. 1, the gas moving direction is limited to the vertical or passing direction with respect to the film bodies 1, 2 and 3. This point is common between the module constituted by the hollow fiber membrane as shown in Fig. 2, and the present invention.

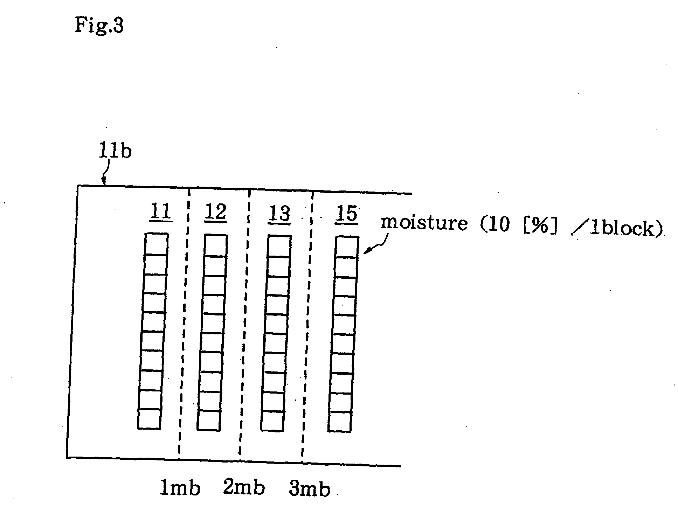

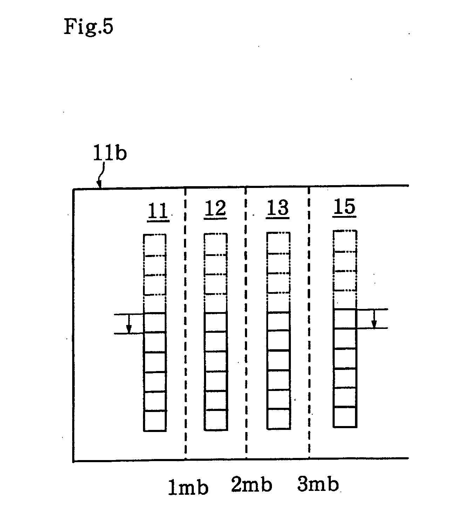

In Fig. 3, there is considered a model in which the humidity of the closed space 11, the inner small chamber 12, the outer small chamber 13 and the outside air 15 (or an exhaust side space) is sectioned every 10 %. In this case, in Fig. 3 and the following Figs. 5, 6, 7, 8, 9, 10 and 11, the film body is briefly referred to as reference symbol mb, the film body 1 is briefly referred to as reference symbol 1mb, the film body 2 is briefly referred to as reference symbol 2mb, and the film body 3 is briefly referred to as reference symbol 3mb.

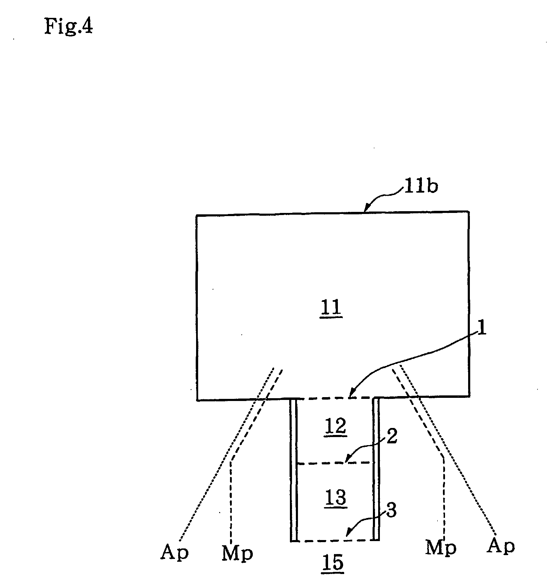

A description will be given of a model for describing the phenomenon of the movement of the vapor movement control device shown in Fig. 1, with reference to a schematic view shown in Fig. 4. In this Fig. 4, reference symbol Ap denotes an air permeability (an inverse number of an air permeability), and reference symbol Mp denotes a moisture permeability.

As shown in Fig. 4, properties of the air permeability and the moisture permeability only have a difference in transmitting amount between the film body 1 and the film body 2, however, are different between the film body 2 and the film body 3, and a difference in the air permeability is recognized between the film body 2 and the film body 3 in spite that the film body 2 and the film body 3 are not so different in the moisture permeability. Accordingly, in the case that the air containing the vapor passing through the film body 2 passes through the film body 3, a change appears in a physical environment.

Further, a difference in the air permeability is set in the film body 3 rather than the film body 1. Accordingly, on the assumption that a total amount of a fixed volumetric capacity of air passing through the film body 1 passes through the film body 2 and the film body 3, the volumetric capacity thereof may be expanded, so that the adiabatic cooling phenomenon may be generated. Further, in the movement from the film body 3 toward the film body 2 and the film body 1 corresponding to the movement in the reverse direction, the adiabatic compression phenomenon may be generated. Since the adiabatic compression or cooling is generated under the pressure fluctuation equal to or less than 50 mb, the adiabatic compression or cooling can inhibit the temperature increase and promote the movement of the vapor.

As a factor for preventing the vapor from moving, the applicant of the present invention pays attention to an electric field of a surface affected by a specific surface potential held in the film body, and can arrange a conductive porous body close to the film body forming a boundary face forming a temperature incline with respect to an influence by a static electricity and fine-adjust them.

Further, in order to apply to an actual outdoor equipment, results obtained by measuring by an experimental model having the basic structure shown in Fig. 1 are shown in graphs in Figs. 33 and 34.

In accordance with these graphs, it is known that an absolute temperature of the closed space inside the box body shows a significant ascent in correspondence to the temperature increase, however, the moisture inside the box body gradually descends in correspondence to a fine slowly repeating temperature decrease together with the temperature fluctuation every day.

In the vapor movement control device having the basic structure shown in Fig. 1, the temperature fluctuation of the outside air 15 with respect to the closed space 11 making good use of this characteristic amounts to much, and the speed difference and the cycle in the change of temperature between the closed space 11 and the outside air 15 are important factors for determining the moving direction of the vapor.

A model as shown in Fig. 5 is considered for describing this matter.

Each of square pieces corresponds to 10 % moisture in the same manner as Fig. 3, and it is individually assumed that all of the closed space 11, the inner small chamber 12, the outer small chamber 13 and the outside air 15 reach a state in which they are all stable in a steady state, and the closed space 11 or the outside air 15 is 10 % lowered.

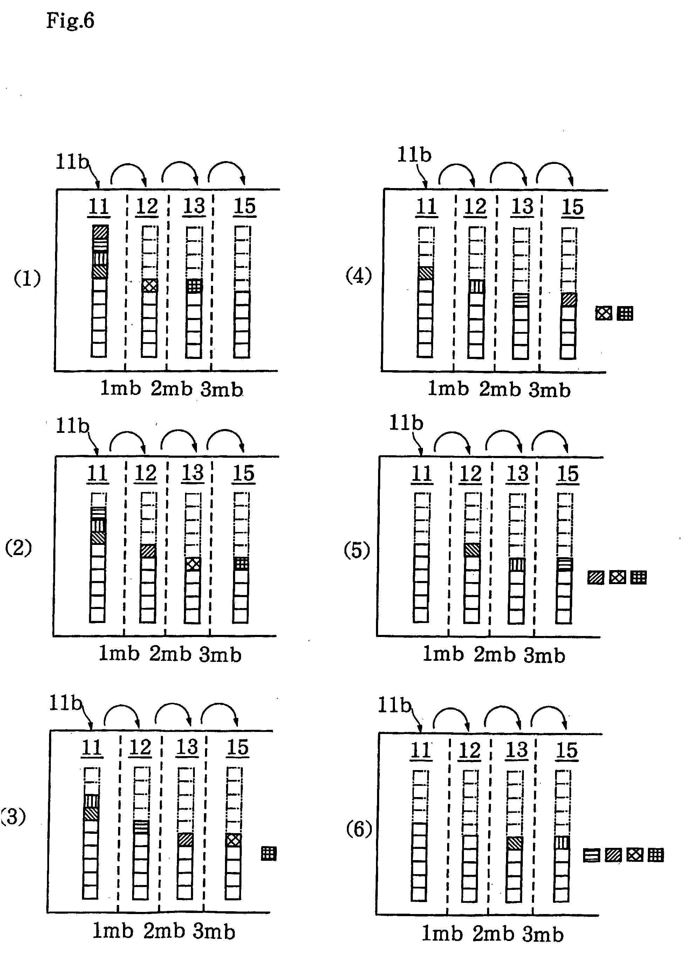

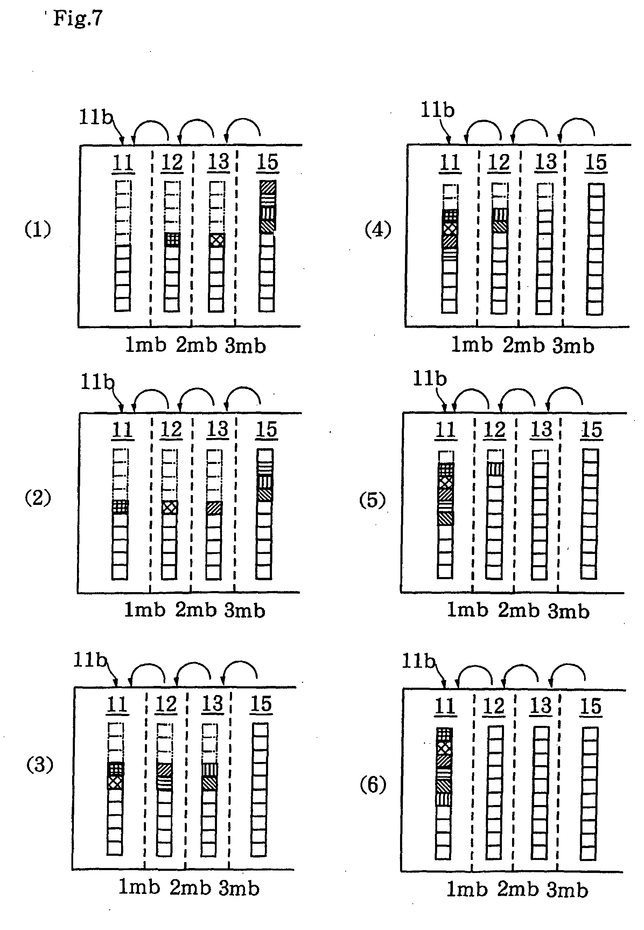

In this case, cases that the most opposite sides to the side which is 10 % lowered are given the condition of 10 % are shown in Fig. 6 ((1) to (6)), and Fig. 7 ((1) to (6)). In this case, it is assumed that the basic model in Fig. 1 is schematically expressed as an ergodicity, and the film body 1, the film body 2 and the film body 3 in the respective boundaries have an ability capable of moving one piece by one piece.

From a certain time point, Fig. 6 shows a case that the closed space 11 changes to 100 % and the outside air 15 changes to 50 %. Further, in the same manner, from a certain time point, in Fig. 7, it is assumed that the closed space 11 becomes 50 % and the outside air 15 is given a condition of 100 %.

Steps of the respective movements are sectioned and arranged in Figs. 6 ((1) to (6)), and Fig. 7 ((1) to (6)) as the schematic views.

As shown in these drawings in Fig. 6, since a path with the outside air 15 is given with respect to the closed space 11 only after passing through the small chambers 12 and 13, the pressure reduction of the closed space 11 is generated in accordance with the movement from the closed space 11 toward the outside air 15, and the moving speed is gradually reduced.

On the other hand, on the assumption that the outside air 15 has no factor limiting the pressure, the pressure fluctuation of the outside air 15 is not generated in the movement from the closed space 11 to the outside air 15. That is, in the movement of the vapor from the small chamber 13 to the outside air 15, the pressure fluctuation does not appear in the outside air 15.

On the contrary, as these drawings shown in Fig. 7, on the assumption that a diffusion inversely moving to the temperature incline can be gradually generated in the movement from the outside air, the pressure ascent in the closed space is generated in the movement from the outside air 15 toward the closed space 11. Further, at this time, if a condition between the boundary films in which the inverse incline can not be generated is given, it is necessary that the moving time satisfies the ascent of the small chambers 13 and 12 with respect to the ascent of one piece in the closed space, so that the movement is generated in delay of only a time required until satisfying the small chambers 12 and 13, that is, two pieces.

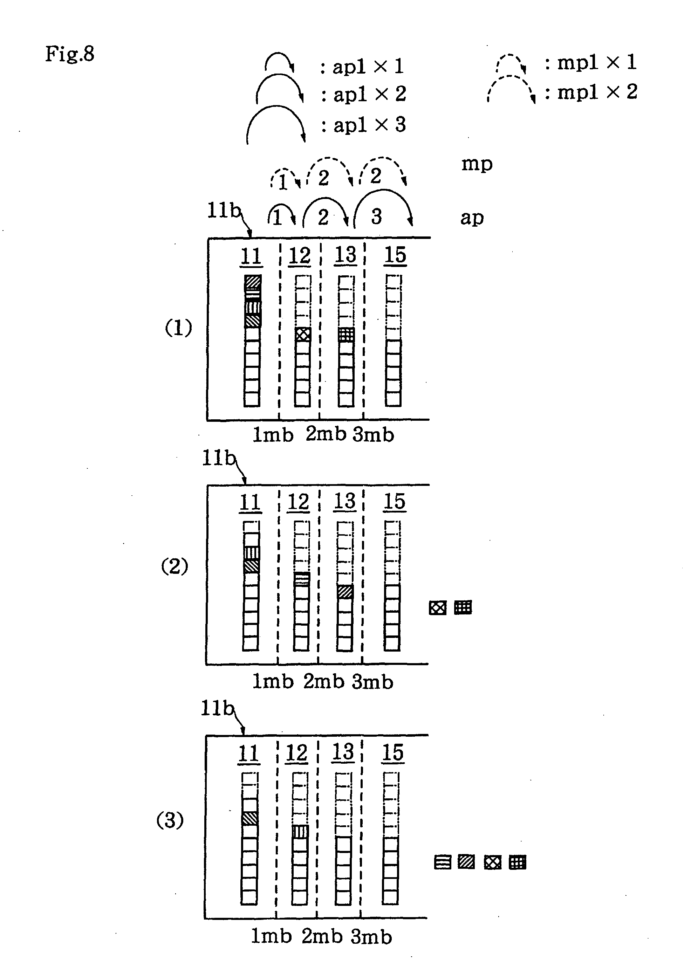

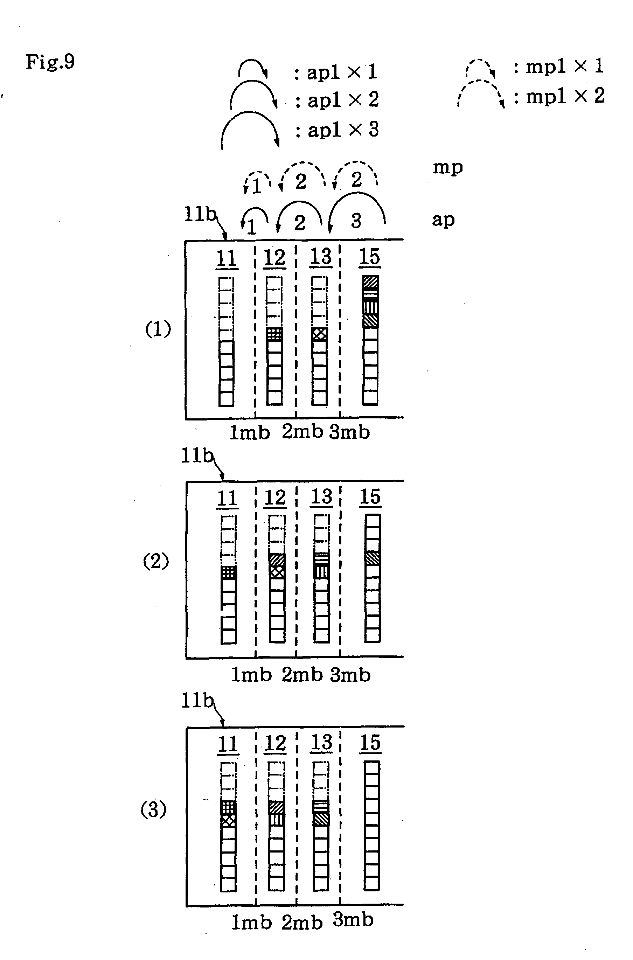

In the same manner, it is assumed that Fig. 8 ((1) to (3)) and Fig. 9 ((1) to (3)) are the limiting factor of the boundary film to which a condition having a difference between the moisture permeability (mp) and the air permeability (ap) is added.

On the assumption that the factors of the film body 1 shown in Fig. 4 are respectively constituted by every one piece of the moisture permeability and the air permeability, in the moving condition, the movements from Fig. 8 (1) to Fig. 8 (3) and from Fig. 9 (1) to Fig. 9 (3) are schematically expressed.

The moving direction is a direction of reducing the pressure of the closed space 11 in Fig. 8, and is a direction of increasing the pressure of the closed space 11 in Fig. 9.

In accordance with these two drawings, it is known that the closed space 11 tends to be stable in a concentration three pieces lower than the outside air 15 which is not limited in the pressure fluctuation, due to the movement in two directions, in the case of this arrangement relation.

Further, this tendency is delayed by the time amount passing through the small chambers 12 and 13, from Figs. 6 and 7.

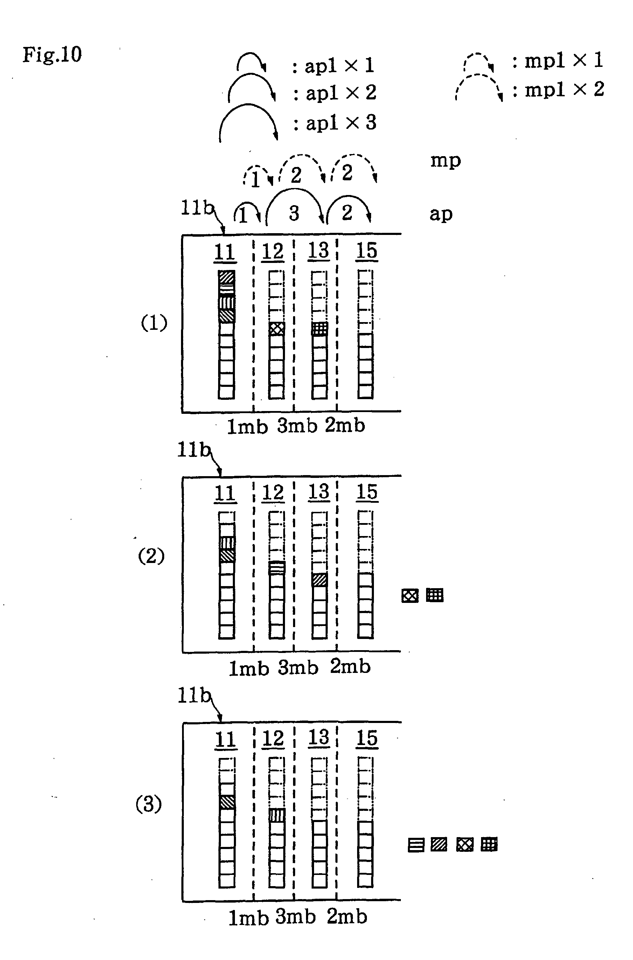

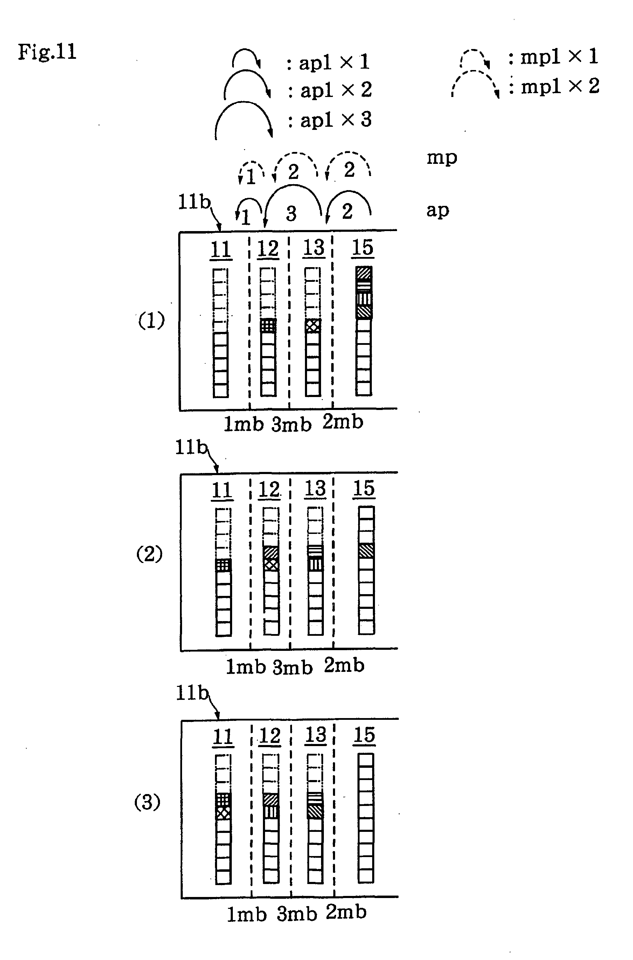

In order to consider the case that the film body 2 and the film body 3 are replaced in the arrangement of the boundary film, with respect to Figs. 8 and 9, schematic views in which it is assumed that the film body 2 and the film body 3 are replaced in the drawing and the other conditions are set to the conditions in Figs. 8 and 9 are shown in Fig. 10 ((1) to (3)), and Fig. 11 ((1) to (3)).

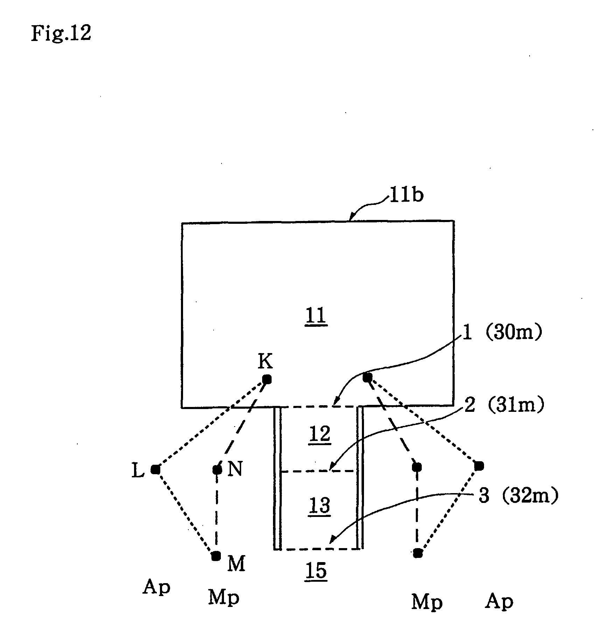

A schematic arrangement view with respect to the air permeability and the moisture permeability in Fig. 4 in this case is shown in Fig. 12. In this case, it is assumed that the small chambers 12 and 13 in Fig. 12 are not changed.

In accordance with the present view, on the assumption that a fixed volumetric capacity of gas moves from the closed space 11 to the small chamber 13 in the movement from the closed space 11 to the small chamber 12, a condition by which an adiabatic cooling can be generated is given by the film body 1 and the film body 3 forming the path. On the other hand, when further moving through the film body 2 after passing through this path, there is given a condition by which an adiabatic compression can be generated without changing the amount of vapor capable of moving. In the case that the adiabatic cooling is generated, the temperature descent (a dew point descent) is generated, and in the case that the adiabatic compression is generated, the temperature ascent (a dew point ascent) is generated. In this case, the adiabatic cooling or the adiabatic compression mentioned above requires a temperature fluctuation which is enough to obtain a sufficient pressure fluctuation.

In accordance with the temperature descent, the moving vapor generates the dew point descent in addition to the pressure fluctuation, and generates the dewpoint ascent in correspondence to the temperature ascent.

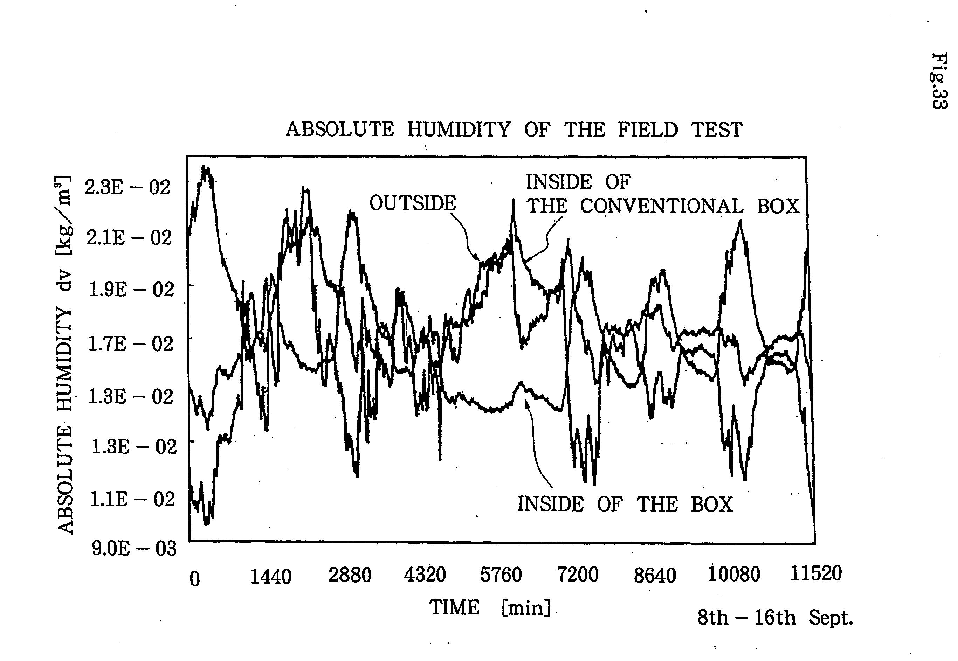

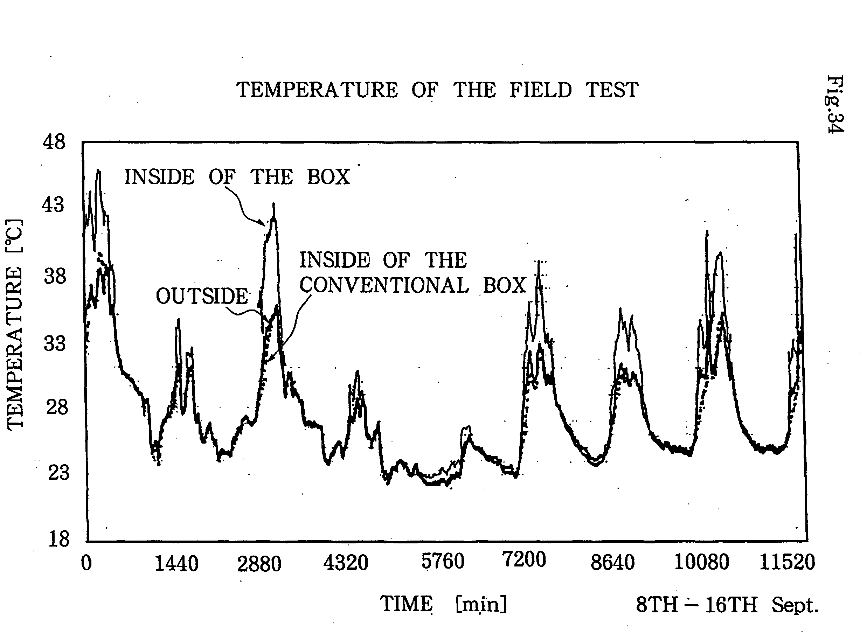

In the case of considering this phenomenon under an environment that the temperature is fixed, it can be considered that a dew condensation tends to be generated under the condition that the dew point is descended and the movement tends to be inhibited, and that the movement on the boundary surface is hard to be inhibited under the condition that the dew point is ascended. Further, it is considered that the water content is attached to the surfaces of these film in the state of Figs. 33 and 34.

This is because the temperature of the film bodies 1, 2 and 3 forming the movement boundary surface and the small chambers 12 and 13 formed by these film bodies shown in Figs. 1, 4 and 12 is strongly affected by the temperature of the adjacent closed space 11.

Considering the dew point descent and the dew point ascent, it is assumed that the moving thermal energy is stored. In Fig. 4, the dew point gradually descends in correspondence to the movement from the closed space 11 toward the outside air 15, however, in the model in Fig. 12, in the same manner as the case in Fig. 4, the dew point incline following to the film body 1 and the film body 2 is formed in correspondence to the movement from the closed space 11 toward the outside air 15.

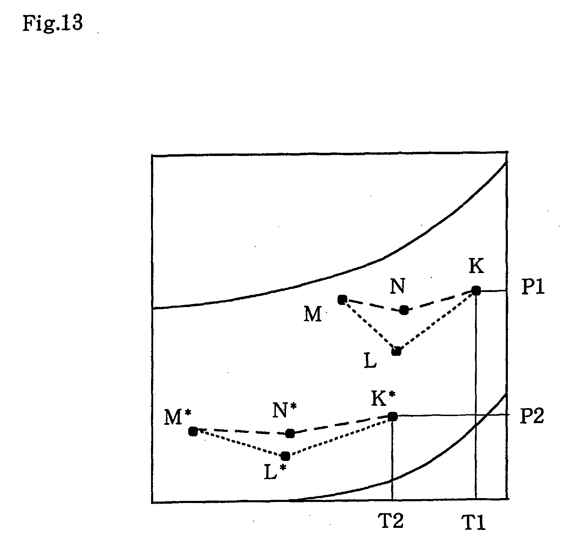

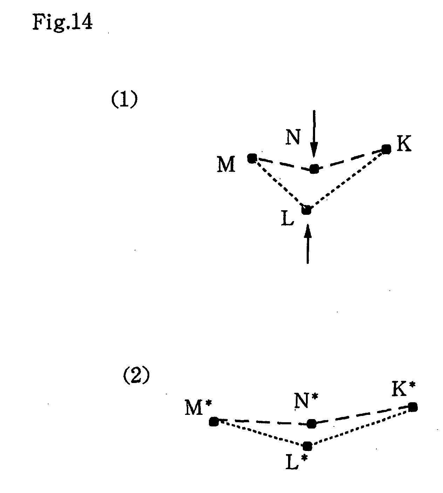

On the assumption that these thermal energy amounts are stored, each of the dew points shown in Fig. 13 and Fig. 14 ((1), (2)) is expressed as a ratio on an enthalpy curve.

In practice, in Figs. 1, 4 and 12, since the time delay required for transmitting the temperature is generated due to the fluctuation of the environmental temperature, it is assumed as shown in Fig. 13 that the ratio indicating the air permeability and the moisture permeability is plotted on the enthalpy curve.

At this time, reference symbols N and L shown in Fig. 14 (1) tend to be low affected by the film body 2 as shown in Fig. 14 (2), in the case that the moving speed between reference symbols K and M is high, that is, in the case that the moving speed at a time of passing through the film body 2 after passing from the film body 1 through the film body 3, or at a time of passing through the film body 1 after passing from the film body 2 through the film body 3.

On the contrary, reference symbols N and L tend to be high affected by the film body 2 as shown in Fig. 14 (2), in the case that the moving speed between reference symbols K and M is low, that is, in the case that the moving speed at a time of passing through the film body 2 after passing from the film body 1 through the film body 3, or at a time of passing through the film body 1 after passing from the film body 2 through the film body 3, and tend to be high affected by the incline of the thermal energy in the small chamber 12 and the small chamber 13.

An absolute humidity fluctuation graph in Fig. 33 corresponds to the temperature fluctuation in Fig. 34, however, an ascent of the concentration is generated at the same time when the pressure ascent of the closed space 11 is generated in correspondence to the ascent of the temperature, so that the pressure ascent of about 50 mb is generated. That is, a change due to the pressure fluctuation accompanying with the ascent of the temperature appears. On the contrary, this device utilizes the matter that the same change can be achieved only by changing the pressure, and it is possible to restrict a calorific power to the minimum so as to control the movement of the vapor.

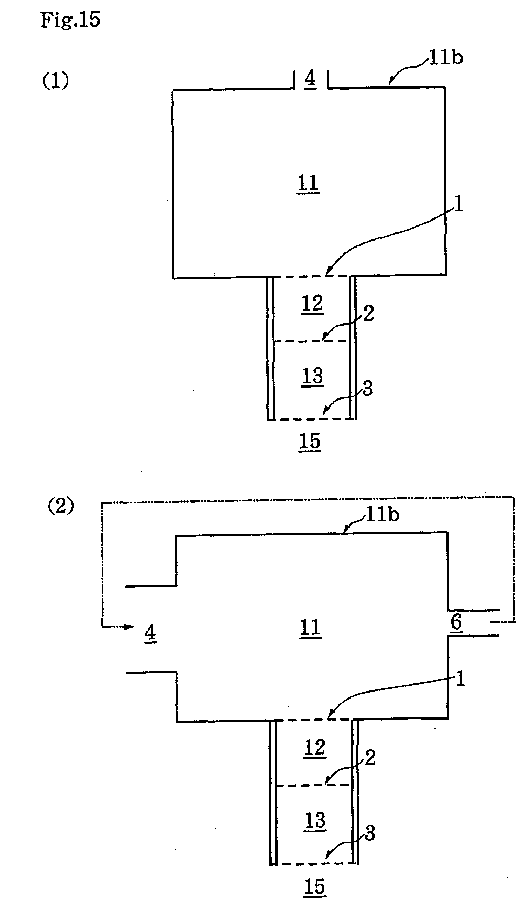

In this case, there is shown in Fig. 15 ((1), (2)) a system which carries out a pressure feeding by making good use of the boundary film on the flat surface shown in Fig. 2, in Fig. 1.

Since a system shown in Fig. 15 (1) is put under the control of a hole diameter of the film body to be passed through, it is directly affected, for example, by dusts, oil mists or the like in the air.

Fig. 15 (2) shows a path in the case that a side sub passage is provided, the surface of the film body 1 is fanned by the air passing from a ventilation passage 4 through a ventilation passage 6 in this case, and tends to be exposed to the temperature fluctuation in a portion corresponding to the film body 1 in the drawing.

In this case, on the assumption that the thermal energy is stored, this influence can be cancelled by making an approximate passing cross sectional area of the ventilation passage 6 smaller than that of the ventilation passage 4. However, in the case that the speed of the passing air is low, the cancellation of the passing amount by the resistance becomes enough small to be ignored, and it actually appears that the temperature change is hardly generated.

Then, in accordance with the present invention, in order to make good use of the characteristic difference between the film body 1 and the film body 3 in Fig. 12 mentioned above and easily store the temperature fluctuation from the film body 3 to the film bodies 2 and 1 at a time when the moving speed is low, there is provided a vapor movement control device which uses a centrifugal force generating the pressure, promoting the vapor movement of the film body with using the pressure increase due to the centrifugal force, and utilizes regulation of the thermal energy transmission speed due to an agitation and the vapor movement speed difference between the film bodies due to the temperature fluctuation.

### BRIEF DESCRIPTION OF THE DRAWINGS

Fig. 1 is a schematic cross sectional view showing a conventional vapor movement control device;
Fig. 2 is a schematic cross sectional view showing a conventional vapor movement control device;
Fig. 3 is a model view in the case of sectioning a moisture in a closed space, an inner small chamber, an outer small chamber and an outside air every 10 %;
Fig. 4 is a schematic view as a model describing a movement phenomenon of a vapor movement control device;
Fig. 5 is a model view in the case of sectioning the moisture in the closed space, the inner small chamber, the outer small chamber and the outside air every 10 %;
Fig. 6 is amodel view in the case of sectioning the moisture in the closed space, the inner small chamber, the outer small chamber and the outside air every 10 %;
Fig. 7 is a model view in the case of sectioning the moisture in the closed space, the inner small chamber, the outer small chamber and the outside air every 10 %;
Fig. 8 is a model view in the case of sectioning the moisture in the closed space, the inner small chamber, the outer small chamber and the outside air every 10 %;
Fig. 9 is a model view in the case of sectioning the moisture in the closed space, the inner small chamber, the outer small chamber and the outside air every 10 %;
Fig. 10 is amodel view in the case of sectioning the moisture in the closed space, the inner small chamber, the outer small chamber and the outside air every 10 %;
Fig. 11 is amodel view in the case of sectioning the moisture in the closed space, the inner small chamber, the outer small chamber and the outside air every 10 %;
Fig. 12 is a schematic arrangement view with respect to an air permeability and a moisture permeability in Fig. 4
Fig. 13 is a view expressing each of dew points on an enthalpy curve on the assumption that a moving thermal energy amount is stored;
Fig. 14 is a view expressing each of the dew points on the enthalpy curve on the assumption that the moving thermal energy amount is stored;
Fig. 15 is a view showing a system which carries out a pressure feeding by making good use of a boundary film of a flat surface as shown in Fig. 2, in Fig. 1;

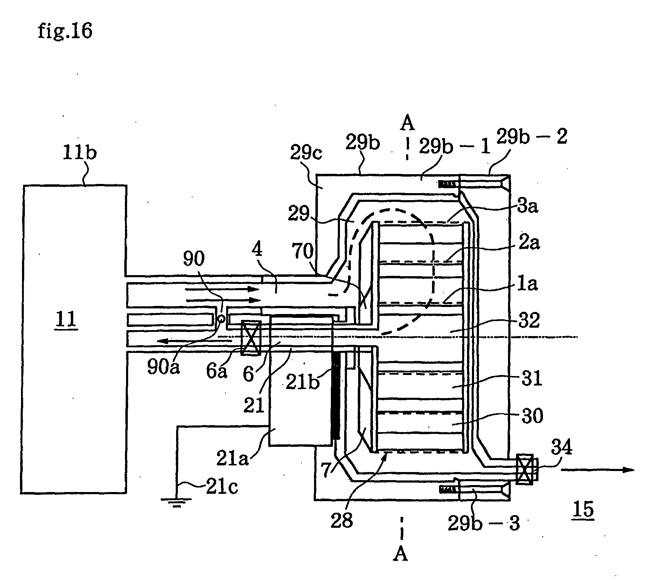

Fig. 16 is a cross sectional view showing a vapor movement control device in accordance with a first embodiment of the present invention;

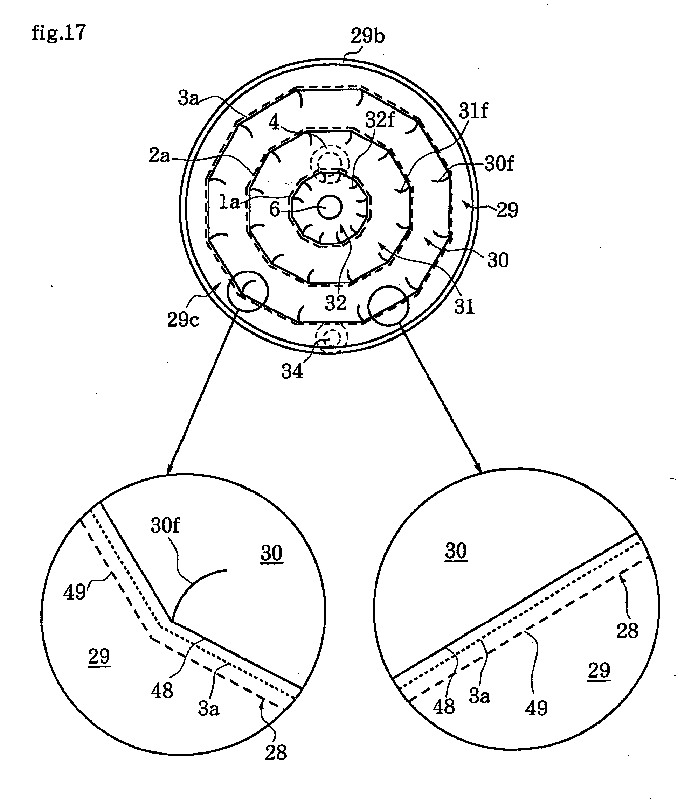

Fig. 17 is a schematic cross sectional view of a separation film rotating body along a line A-A in Fig. 16;

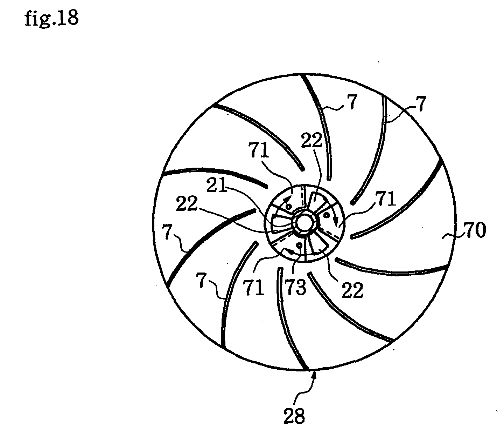

Fig. 18 is a side elevational view of the separation film rotating body;

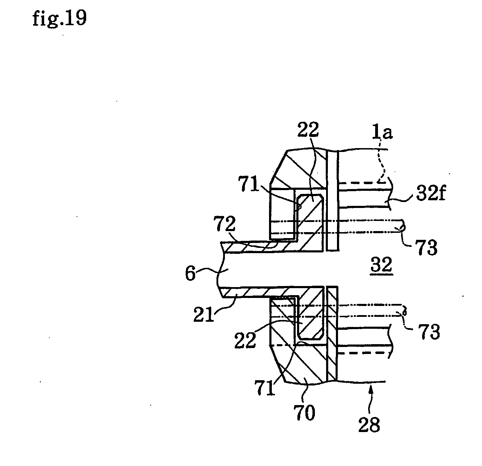

Fig. 19 is a cross sectional view showing an example of the separation film rotating body and an attaching and detaching structure of a rotation shaft;

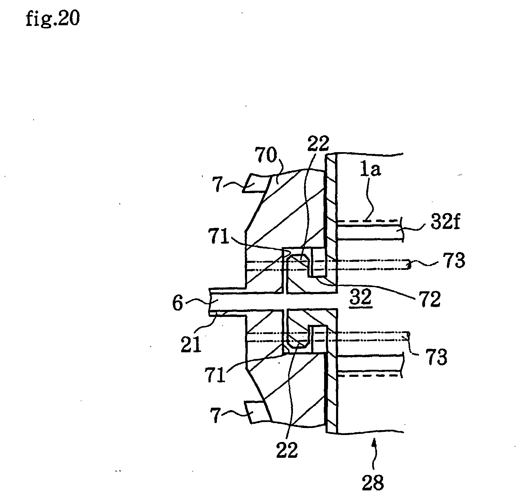

Fig. 20 is a cross sectional view showing an example-of the separation film rotating body and the attaching and detaching structure of the rotation shaft;

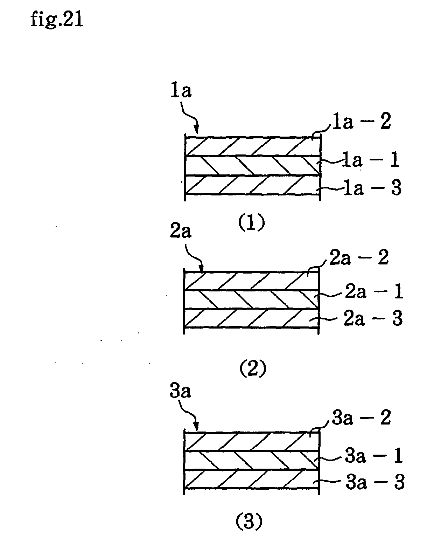

Fig. 21 is a view of a structure of a cylindrical film body;

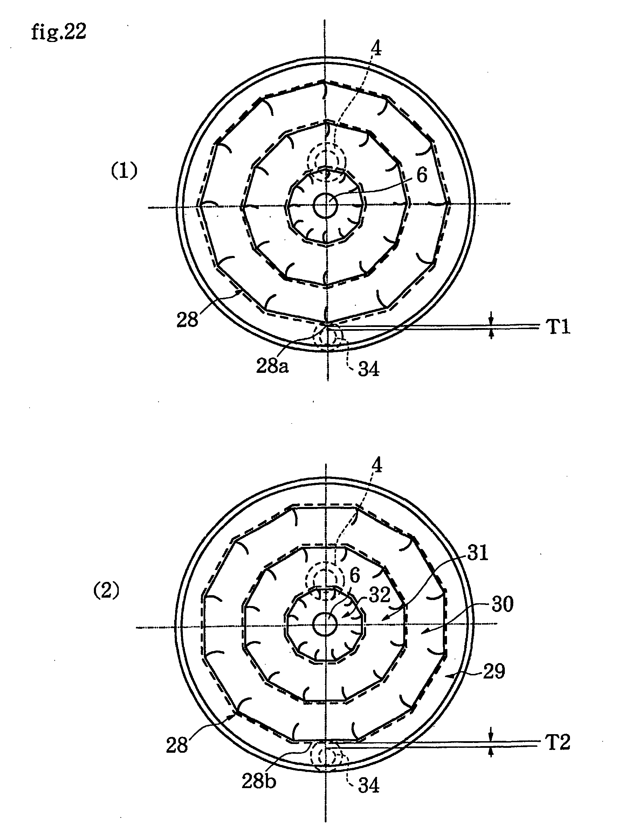

Fig. 22 is a view showing a positional relation between positions of a first ventilation passage and a second ventilation passage and the separation film rotating body;

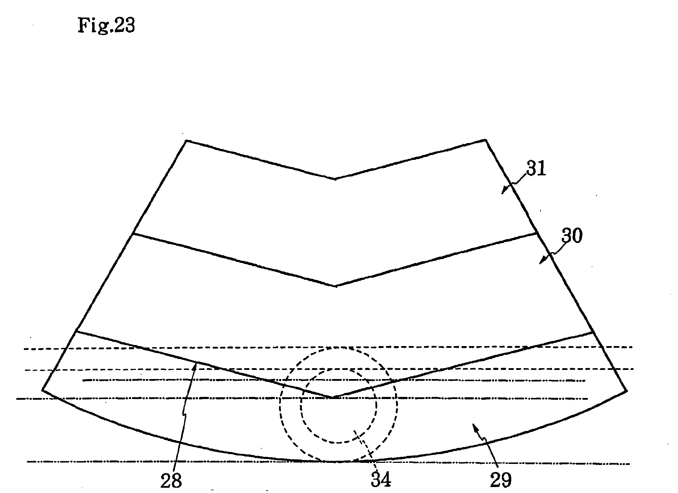

Fig. 23 is a view showing a case that the positional relation between the positions of the first ventilation passage and the second ventilation passage and the separation film rotating body is defective;

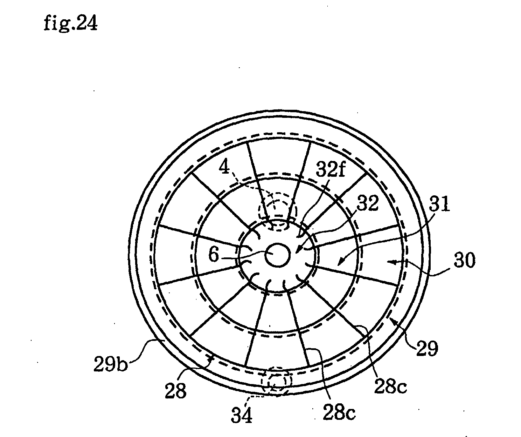

Fig. 24 is a cross sectional view showing another embodiment of the separation film rotating body;

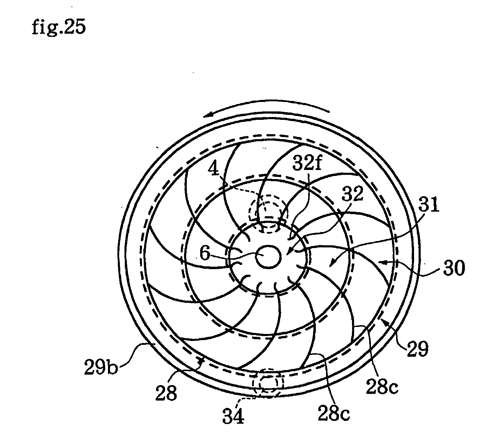

Fig. 25 is a cross sectional view showing the other embodiment of the separation film rotating body;

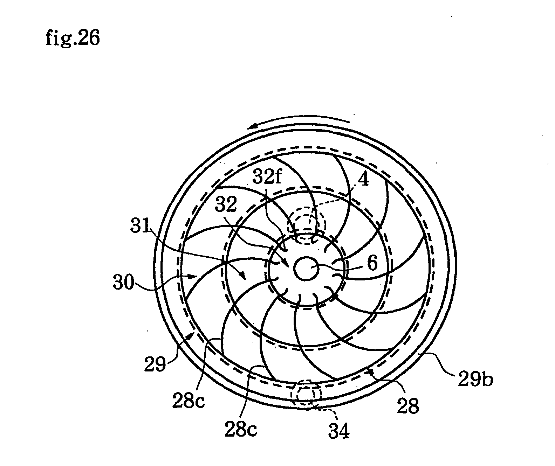

Fig. 26 is a cross sectional view showing the other embodiment of the separation film rotating body;

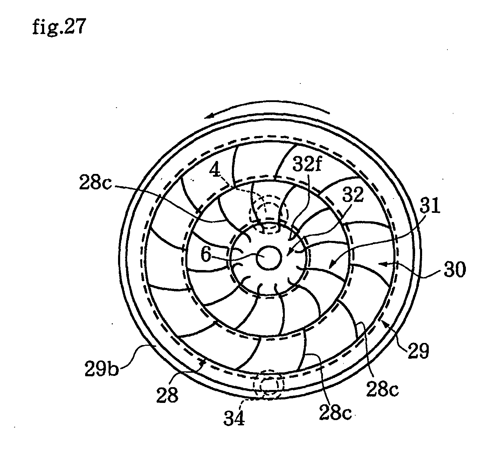

Fig. 27 is a cross sectional view showing the other embodiment of the separation film rotating body;

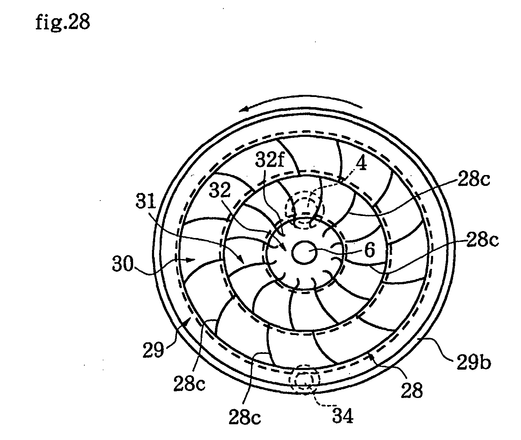

Fig. 28 is a cross sectional view showing the other embodiment of the separation film rotating body;

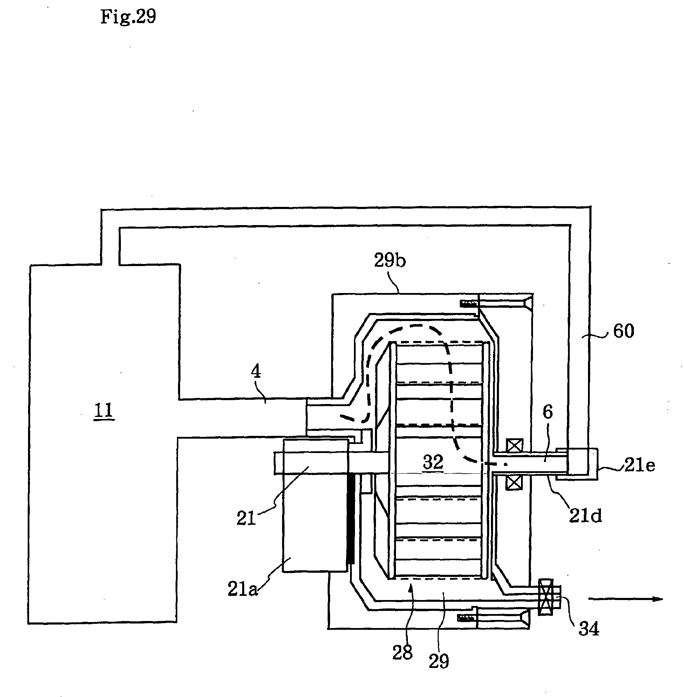

Fig. 29 is a cross sectional view showing another embodiment of the vapor movement control device;

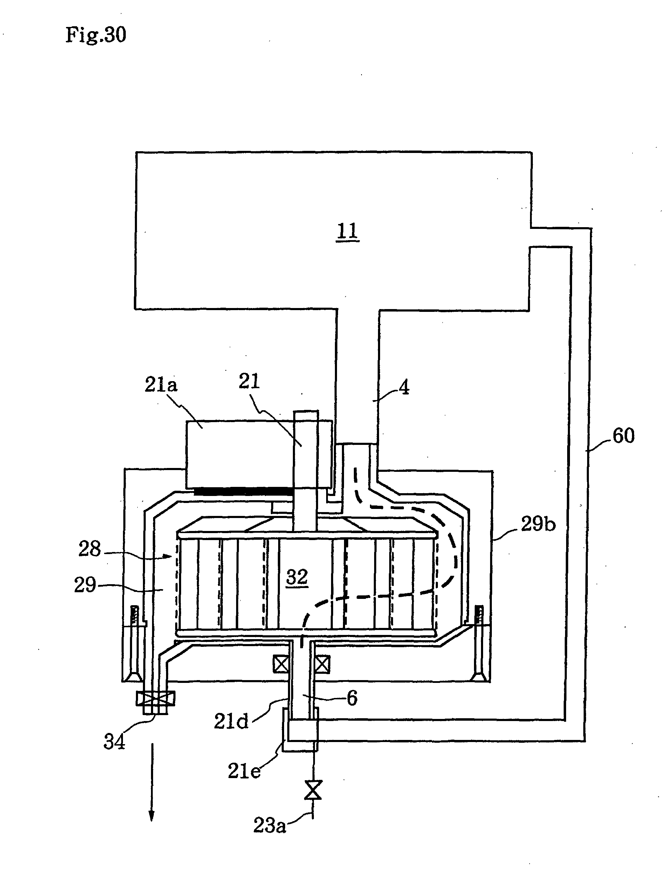

Fig. 30 is a cross sectional view of a case that the vapor movement control device in Fig. 29 is placed in a different direction;

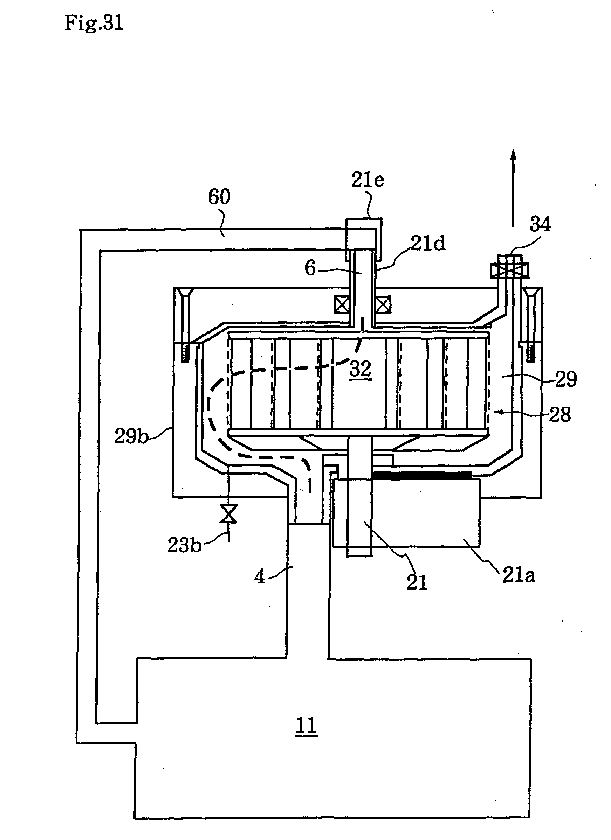

Fig. 31 is a cross sectional view of a case that the vapor movement control device in Fig. 29 is placed in a different direction;

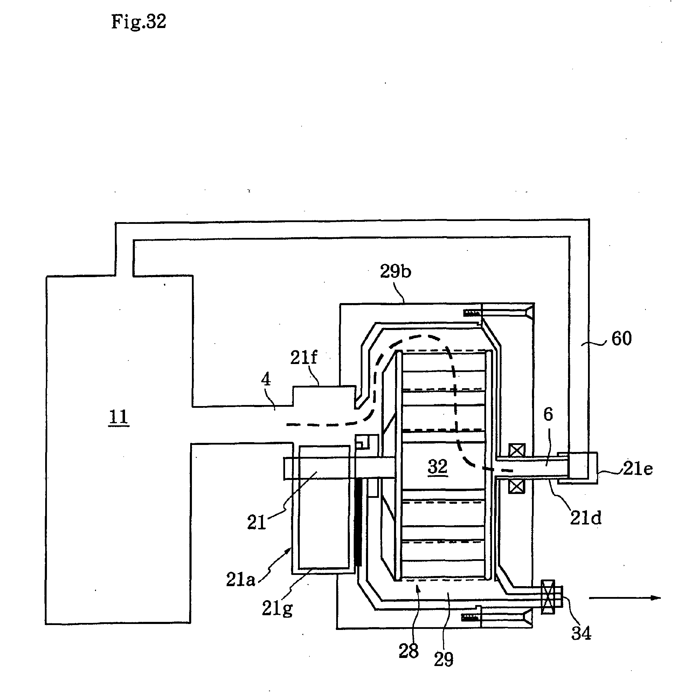

Fig. 32 is a cross sectional view showing the other embodiment of the vapor movement control device;
Fig. 33 is a graph showing a result obtained by measuring a fluctuation of an absolute humidity by means of an experimental model having a basic structure of the vapor movement control device shown in Fig. 1; and
Fig. 34 is a graph showing a result obtained by measuring a fluctuation of a temperature by means of the experimental model having the basic structure of the vapor movement control device shown in Fig. 1.

### BEST MODE FOR CARRYING OUT THE INVENTION

A description will be given of embodiments in accordance with the present invention with reference to the accompanying drawings. In this case, a particular structure of the present invention is not limited to the following embodiments.

Fig. 16 is a cross sectional view showing a vapor movement control device in accordance with a first embodiment of the present invention, Fig. 17 is a schematic cross sectional view of a separation film rotating body 28 along a line A-A in Fig. 16, and Fig. 18 is a side elevational view of the separation film rotating body 28.

This vapor movement control device is structured such that a first closed space 11 formed inside a box body 11b to be humidity-controlled and a second closed space 29 formed inside a casing 29b are communicated through a first ventilation passage 4, a separation film rotating body 28 in which a plurality of tubular film bodies 1a, 2a and 3a formed by film bodies having an air permeability and a humidity permeability and having different diameters are arranged on the same rotating axis 21 is pivotally supported in the second closed space 29, a plurality of small chambers 30 and 31 and an innermost space 32 sectioned by the respective tubular film bodies 1a, 2a and 3a are formed in the separation film rotating body 28, sirocco fans 30f, 31f and 32f promoting generation of a centrifugal force of the inward existing gas are mounted, and a centrifugal fin 7 (of a turbo screw type) is provided on the side surface thereof, a heat transfer member 21b transferring heat from a motor 21a (a rotating machine) of the separation film rotating body 28 to the separation film rotating body 28 is provided, the innermost space 32 of the separation film rotating body 28 is communicated with the first closed space 11 through the second ventilation passage 6 formed inside the rotating shaft 21, and the second closed space 29 is communicated with the outside air 15 through an outside air ventilation passage 34.

In this case, the number of the small chambers is at least one, and in the case of one chamber, the small chamber is sectioned by using two tubular film bodies having different diameters. Glass wool or granular bodies (φ 2 to 5 mm) of expanded polystyrene spherical bodies may be received as a heat insulating material within the small chamber, or an alumina treatment may be applied as a rust proofing to the fins, the frames and the like within the small chamber.

The rotation shaft 21 is made of a stainless steel, and the temperature is transmitted from the rotation shaft 21 to the separation film rotating body 28 from the motor 21a through the heat transfer member 21b, or from the rotation shaft 21 to the casing 29b, thereby forming the temperature incline within the small chambers 30 and 31 and the innermost space 32.

In this case, although an illustration is omitted, a heat buffering body may be provided so as to oppose to a side surface of the separation film rotating body 28 with keeping a gap or may be provided integrally in the side surface of the separation film rotating body 28.

Further, a bore diameter of the first ventilation passage 4 is formed larger than a bore diameter of the second ventilation passage 6, thereby inhibiting the pressure reduction in the second closed space 29.

Further, the casing 29b is covered by a heat insulating layer 29c, and the separation film rotating body 28 rotates around the rotation shaft 21 by the motor 21a (the rotating machine) mounted so as to be in close contact with this heat insulating layer 29c. The heat is transferred to the casing 29b and the rotation shaft 21 from the motor 21a via the heat transfer member 21b. In this case, the structure may be made such as to shield the heat transmission to the rotation shaft 21, or the structure may be made such that the heat transmission from the heat transfer member 21b is applied to the bearing. In this case, a magnetic fluid may be employed as a seal member between the bearing and the rotation shaft 21a. Further, as the motor 21a, a three-phase motor, a direct-current brushless core-less motor and the like may be employed as a drive rotating machine in which a direction of rotation can be reciprocated.

Further, the casing 29b is structured such as to be dissembled at a time of assembling or dissembling the separation film rotating body 28 by fastening a lid member 29b-2 to a main body member 29b-1 by a screw 29b-3.

Further, a corner portion of the casing 29b is beveled so as to make an air stream in the inside second closed space 29 smooth, thereby preventing a waterdrop reserving failure.

Further, the separation film rotating body 28 is formed detachable with respect to the rotation shaft 21.

A description will be given of an attaching and detaching structure thereof on the basis of an example in Figs. 18 and 19 and an example in Fig. 20.

The attaching and detaching structure in Figs. 18 and 19 is structured such that a base 70 of a centrifugal fin 7 is integrally formed with the separation film rotating body 28, and three engagement pieces 22 are radially provided in a leading end of the rotation shaft 21 in a protruding manner. Further, three engagement grooves 71 detachably engaging with the respective engagement pieces 22 are radially formed in an inner periphery of an axial hole 72 formed in the base 70, and the structure is made such that the engagement pieces 22 are fitted into the engagement grooves 71 so as to be engaged therewith by inserting the engagement pieces 22 into the axial hole 72 and rotating the engagement pieces 22 at a fixed angle. In this case, reference numeral 73 denotes a screw for a stopper.

Further, the attaching and detaching structure in Fig. 20 is structured such that the base 70 of the centrifugal fin 7 is integrally formed with the rotation shaft 21, and three engagement pieces 22 are radially provided in a side surface of the separation film rotating body 28 in a protruding manner. Further, three engagement grooves 71 detachably engaging with the respective engagement pieces 22 are radially formed in the inner periphery of the axial hole 72 formed in the base 70, and the structure is made such that the engagement pieces 22 are fitted into the engagement grooves 71 so as to be engaged therewith by inserting the engagement pieces 22 into the axial hole 72 and rotating the engagement pieces 22 at a fixed angle.

Each of the tubular film bodies 1a, 2a and 3a are formed by setting up a film body on an polygonal (a dodecagon) aluminum frame body 48, a conductive porous body or a non-conductive porous body 49 is set up with keeping a slight interval in an outer periphery of each of the tubular film body 1a, 2a and 3a, and the sirocco fins 30f, 31f and 32f are integrally mounted to the respective frame bodies 48. In this case, the film bodies 1a, 2a and 3a are supported by the frame body 48 so as not to strained by the centrifugal force at the rotating time, thereby preventing the air permeability and the moisture permeability from being denatured.

In this case, the non-conductive porous body 49 can obtain an effect of canceling a temperature unevenness in a circumference of the separation film rotating body 28, in the case that the non-conductive porous body 49 is constituted by a material having a high thermal conductivity. Further, it is possible to obtain an effect of maintaining a shape obtained by an extension of a water absorbed or moisture absorbed film body from a shape obstructing the rotation.

Each of the small chambers 30 and 31 and the innermost space 32 is agitated by the sirocco fins being below each of the space approximate cross sectional areas, and has an effect of promoting the generation of the centrifugal force of the inward existing gas and making it hard to generate the concentration difference.

In this case, although an illustration is omitted, the conductive porous body or the non-conductive porous body may be set up with keeping a slight interval in the inner periphery of the tubular film bodies 1a, 2a and 3a.

Further, a ground wire 21c for grounding an electrostatic charge of the non-conductive porous body 49 is extended from the motor 21a so as to be wired.

Next, a description will be given of a structure of each of the tubular film bodies 1a, 2a and 3a with reference to Fig. 21 ((1) to (3)).

Each of the tubular film body 1a shown in Fig. 21 (1), the tubular film body 2a shown in Fig. 21 (2) and the tubular film body 3a shown in Fig. 21 (3) is formed in a three-layer structure.

The tubular film body 1a has the three-layer structure in which a laminate structure is constructed by laminating a center special porous film 1a-1 by a nylon non woven fabric 1a-2 and a PE porous film 1a-3.

The tubular film body 2a has the three-layer structure in which a laminate structure is constructed by laminating a center special porous film 2a-1 by a polyolefin non woven fabric 2a-2 and a PE porous film 2a-3.

The tubular film body 3a has the three-layer structure in which a laminate structure is constructed by laminating a center special porous film 3a-1 by a polyolefin non woven fabric 3a-2 and a PE porous film 3a-3.

In this case, as the other materials, it is possible to use a PE porous film, a polyolefin non woven fabric. a polyurethane or the like.

Next, a moisture permeability, an air permeability, a maximum bore diameter and a film thickness of each of the tubular film bodies 1a, 2a and 3a are shown in the following Table 1.

**Table 1**

| Cylinder film body | Moisture permeability (JIS-L-1099) | Air permeability (JIS-P-8117) | Maximum hole diameter | Film thickness |
|---|---|---|---|---|
| Cylinder film body 1a (Nitto Denko Corp.) 1108-N40C | 250(g/m²· day) | 18000 (sec/100cc) | 10 µm | 0.30 mm |
| Cylinder film body 2a (Nitto Denko Corp.) 1100-C40A | 2000 (g/m²· day) | 1000 (sec/100cc) | 15 µm | 0.25 mm |
| Cylinder film body 3a (Nitto Denko Corp.) 1050-P20B | 4600 (g/m^{2.} day) | 350 (sec/100cc) | 20 µm | 0.20 mm |

In this case, with respect to the bore diameter of the film body, it is possible to form straight, it is possible to form inclined in a taper shape, or it is possible to use by reversing a direction of incline.

Next, Fig. 22 ((1), (2)) shows a positional relation between positions of the first ventilation passage 4 and the outside air ventilation passage 34 and the separation film rotating body 28.

In this case, as shown in Fig. 22 (1) and Fig. 22 (2), an interval T1 and an interval T2 are set so that the outermost peripheral corner portion 28a and the outermost peripheral flat portion 28b of the separation film rotating body 28 do not lap over the outside air ventilation passage 34.

As shown in Fig. 23, in the case that the outermost peripheral portion of the separation film rotating body 28 laps over the outside air ventilation passage 34, the pressure fluctuation of the second closed space 29 is formed in a wave motion shape so as to cause a malfunction. Accordingly, this is clearly shown.

Next, Fig. 24 shows another embodiment of the separation film rotating body 28. In this case, each of the tubular film bodies 1a, 2a and 3a is formed by setting up the film body on the circular frame body 48, a sirocco fin 32f is provided only in the innermost space 32, and the partition wall 28c is radially formed from the sirocco fin 32f so as to section the small chambers 30 and 31 into a plurality of small chamber sections. As mentioned above, an outer width and an inner width of the sirocco fin may be changed. Accordingly, it is possible to promote the generation of the temperature incline between the small chambers by applying the incline to a pressure application state of the inside gas in the outer small chamber section and the inner small chamber section and obtaining the pressure application incline.

As mentioned above, when forming the outer periphery of the separation film rotating body 28 in a circular shape, the pressure fluctuation in the second closed space 29 is hard to be generated in correspondence to the rotation of the separation film rotating body 28.

Further, the sirocco fin may be provided, for example, only in the small chamber 30 as far as the sirocco fin promotes the generation of the centrifugal force of the inside existing gas. Further, in the case that the inside existing gas flows so that the rotating motion is applied between the innermost space 32 and the outer periphery of the separation film rotating body 28, the partition wall 28c is formed without trouble, for example, it is possible to make the interval of the partition wall 28c further narrow, the partition wall 28c may be provided not radially in a radial direction, but radially in an oblique direction shifted from a center of the separation film rotating body 28, and a lot of tube bodies may be radially provided between the tubular film body 1a and the tubular film body 2a and between the tubular film body 2a and the tubular film body 3a, thereby flowing the gas between the innermost space 32 and the outer periphery of the separation film rotating body 28.

As an example thereof, there is shown in Figs. 25 to 28c structure provided radially in the oblique direction shifted from the center of the separation film rotating body 28.

Fig. 25 shows a structure in which the partition wall 28c is arranged spirally, and shows an example in which each of the small chamber sections from the second closed space 29 including the high pressure generated by the centrifugal fin 7 run into the innermost space 32 tends to move from the innermost space 32 to the second closed space 29 with respect to the rotation direction at a high possibility. It is possible to obtain an effect of regulating the pressure incline of the path from the second closed space 29 run into the innermost space 32 so as to promote the smooth vapor movement, at a time when the inside gas in the small chamber section moves from the center to the outer periphery in correspondence to the rotation of the separation film rotating body 28.

Fig. 26 shows an example in which the partition wall 28c is provided in the inverse direction to that of the case in Fig. 25. In the case of the partition wall 28c having the surface in a scooping direction from the outer periphery with respect to the rotation direction, it is possible to prevent the matter that the moving amount of the vapor becomes too large and the dew condensation is generated, and the vapor is discharged as the water from the outside air ventilation passage 34. That is, owing to these partition wall 28c, it is possible to obtain a force opposing to the centrifugal force, as shown in Fig. 26.

Further, Fig. 27 shows an example in which the partition wall 28c in Fig. 25 is separated between the respective small chambers 30 and 31 so as to be arranged in a shifted manner, and Fig. 28 shows an example in which the partition wall 28c in Fig. 26 is separated between the respective small chambers 30 and 31 so as to be arranged in a shifted manner. Accordingly, it is possible to regulate the agitating effect which applies an affect of the air stream to each other between the small chambers 30 and 31.

In this case, the bore diameter of the first ventilation passage 4 and the bore diameter of the second ventilation passage 6 are not limited in size, it is possible to regulate the flow rate by arranging valves 6a and 34a for regulating the flow rate of the second ventilation passage 6 (a side sub circulating port) and the outside air ventilation passage 34, for example, a pinch valve, a needle valve or the like, and it is possible to smoothly circulate the air by making the bore diameter of the second ventilation passage 6 larger than the bore diameter of the first ventilation passage 4.

Accordingly, the gas entering from the first ventilation passage 4 flows into the second closed space 29 by being applied the centrifugal force by the centrifugal fan 7, and is partly discharged to the outside air from the outside air ventilation passage 34 while coming across the rotation of the separation film rotating body 28.

Further, since within the separation film rotating body 28, the small chambers 30 and 31 and the innermost space 32 are sectioned by the tubular film bodies 1a, 2a and 3a, the movement of the inside air caused by the centrifugal force toward the small chambers 30 and 31 in the case of the low speed rotation which is below the rotation applied by the centrifugal fan 7, so that the pressure reduction may be generated in the innermost space 32 and the second ventilation passage 6.

In correspondence to the rotation which changes from the low speed to the high speed, the surface of the separation film rotating body 28 is exposed to the cooling, and the adiabatic cooling is generated in the order of the small chamber 30, the small chamber 31 and the innermost space 32.

However, since in the arrangement of the film bodies, the path for finally increasing the pressure, that is, the arrangement shown in Fig. 12 of the film body 1, the film body 2 and the film body 3 is set to the arrangement of the films 30m, 31m and 32m, in the case that the ascent of the pressure in the second closed space 29 reaches the enough proper rotation speed to be more than the pressure reduction of the outside air ventilation passage 34, the vapor causes to ascend the dew point in the case of flowing from the small chamber 30 toward the innermost space 32 rather than the case of flowing from the innermost space 32 toward the small chamber 30, and gets free from the factor obstructing the passing of the film. Accordingly, the movement from the small chamber 30 toward the innermost space 32 gradually overcomes, and the vapor is discharged from the outside air ventilation passage 34 to the outside air 15.

A description will be given of a principle thereof by secondarilyusing Fig. 12. It is considered that a vapor pressure in K and a vapor pressure in M can be described as a phenomenon in which an inverse penetration phenomenon caused by an application of a pressure in an opposing direction to a moving pressure of the air corresponding to a medium having a pressure increased by the centrifugal force increased in accordance with the incline of the separation film rotating body 28 is generated by the water content formed on the film body surface. In general, a Knudsen diffusion or a selective penetration is not generated in the film body having the large bore diameter mentioned above, however, it is possible to generate such an effect by using the dew condensation or a hygroscopic property. These films have a high durability against the water, and are inexpensive.

In this case, in the vapor movement control device in accordance with the present invention, a cavity body such as an expanded polystyrene corresponding to a porous body made of a flame retardant material, PE, PV having a low water absorbing property and the like, an aluminum lump or the like which tends to form the temperature incline in the small chambers 30 and 31 and the innermost space 32 may be employed for the material of the casing 29b, the separation film rotating body 28 and the like. Further, in order not to promote the temperature incline of the small chambers 30 and 31 and the innermost space 32 at a time of rotating, the material may be changed between the outer peripheral portion and the inner side of the separation film rotating body 28, thereby preventing the temperature incline from being generated.

Further, in the case of rotating the separation film rotating body 28 so that the air stream circulates in the order of the closed space 11, the first ventilation passage 4, the second closed space 29, the separation film rotating body 28, the second ventilation passage 6 and the closed space 11, the moisture conditioning is carried out in such a manner as to discharge the vapor from the closed space 11 to the outside air 15 through the separation film rotating body 28 and the outside air ventilation passage 34, and in the case of rotating inversely, the moisture conditioning is carried out in such a manner as to take the vapor in the closed space 11 from the outside air 15 through the outside air ventilation passage 34 and the separation film rotating body 28. The forward rotation and the backward rotation are selected as occasion demands.

Further, when the structure is made such that a cleaning water is taken inside the separation film rotating body 28 on the basis of a back flow generated by inverse rotating the separation film rotating body 28, by using a turbo fin provided with a spiral curve in the centrifugal fin 7 so as to generate the back flow at a time of cleaning the dusts or the like attached to the separation film rotating body 28, it is possible to wash out the dusts or the like attached to the separation film rotating body 28.

Next, Fig. 29 is a cross sectional view showing the other embodiment of the vapor movement control device. In this vapor movement control device, the innermost space 32 of the separation film rotating body 28 is communicated with the first closed space 11 through the second ventilation passage 6 formed inside a rotation shaft 21d and a circulating passage 60. In this case, the rotation shaft connected to the motor 21a is formed solid, and the rotation shaft 21d and the circulating passage 60 are connected through a rotation joint 21e. In this case, the other structures are the same as the vapor movement control device in Fig. 16.

In accordance with the structure mentioned above, it is possible to support the separation film rotating body 28 by the left and right rotation shafts 21 and 21d, so that it is possible to stably support the separation film rotating body 28 in comparison with the case that the separation film rotating body 28 is supported in a cantilever manner by one rotation shaft 21 as in the case in Fig. 16.

Next, Figs. 30 and 31 show cases that the vapor movement control device in Fig. 29 is placed in different directions.

In this case, as shown in Fig. 30, when arranging so that the first ventilation passage 4 is upward directed, and the second ventilation passage 6 and the outside ventilation passage 34 are downward directed, the outside ventilation passage 34 is hard to be under the trouble that the ventilation passage is plugged by the dew condensation, however, tends to be under the trouble that the water is stored in the bottom portion of the second closed space 29. In this case, reference symbol 23a in. the drawing denotes a drain port.

Further, as shown in Fig. 31, when arranging so that the first ventilation passage 4 is downward directed, and the second ventilation passage 6 and the outside ventilation passage 34 are upward directed, the outside ventilation passage 34 and the second ventilation passage 6 are arranged so as to be hard to be under the trouble that the water is stored by the dew condensation, however, in the case of placing outdoor, it is necessary to attach a sun shade or a drip proof type umbrella to the outside ventilation passage 34. In this case, reference symbol 23b in the drawing denotes a drain port.

In this case, without relation to the placing direction of the vapor movement control device, the air filter or the drip proof type umbrella may be provided in the first ventilation passage 4 and the outside air ventilation passage 34.

Further, the number, the position and the direction of the outside air ventilation passage 34 can be optionally set.

Further, Fig. 32 is a cross sectional view showing the other embodiment of the vapor movement control device.

In this case, the first ventilation passage 4 is formed in such a manner as to be communicated with the second closed space 29 through an inner side of a motor casing 21f in a state of avoiding a motor driving portion 21g of the motor 21a. In this case, the other structures are the same as those of the vapor movement control device in Fig. 29.

In accordance with this structure, since the air passing through the first ventilation passage 4 is heated by the heat generation of the motor 21a, a relative moisture descends, and the dew condensation is hard to be generated in each of the portions.

Further, in the vapor movement control device shown -in Fig. 16, a flow meter 90 is provided bypassing between the second ventilation passage 6 and the first ventilation passage 4, as a structure for testing the vapor movement control device.

This flow meter 90 is used as a means for measuring the state of the air stream in the second ventilation passage 6 accompanying with the rotation of the separation film rotating body 28, and is set so that a float 90a provided in an inner portion is positioned at a middle position in a normal state. In the case that a turbulence is generated in the state of the air stream, the float 90a moves upward or downward, whereby an abnormal state can be comprehended on the basis of the moving direction.

That is, in the case of testing the vapor movement control device shown in Fig. 16, the state of the air stream in the second ventilation passage 6 caused by the rotation of the separation film rotating body 28 is measured by the flow meter 90 while rotating the separation film rotating body 28.

In this case, on the basis of the rotation of the separation film rotating body 28, the circulation of the air stream is generated in the order of the first closed space 11, the first ventilation passage 4, the second closed space 29, the separation film rotating body 28, the second ventilation passage 6 and the first closed space 11, and in the case that the plugging is generated in the tubular film bodies 1a, 2a and 3a of the separation film rotating body 28 due to the dusts or the like which are made into intrusion from the outside air, at this time, the flow rate of the second ventilation passage 6 is reduced in comparison with the normal time, so that the leak of the air stream is generated from the first ventilation passage 4 to the second ventilation passage 6 through the bypass, whereby the float 90a moves downward from the middle position.

On the contrary, in the case that the tubular film bodies 1a, 2a and 3a of the separation film rotating body 28 are broken (have pin holes or the like), or have a poor air tight and a poor bonding in the manufacturing step, the flow rate of the second ventilation passage 6 is increased in comparison with the normal time, so that the leak of the air stream is generated from the second ventilation passage 6 to the first ventilation passage 4 through the bypass, whereby the float 90a moves upward from the middle position.

As mentioned above, it is possible to test whether the vapor movement control device is normal or abnormal, by checking the upward or downward movement of the float 90a.

### INDUSTRIAL APPLICABILITY

As described above, in accordance with the vapor movement control device of the present invention, since the structure is made such as mentioned above, it is possible to provide a vapor movement control device which is small in size, is capable of fine-adjusting a separation efficiency by the revolution speed of a separation film rotating body, is less in vibration, and is capable of saving energy remarkably by the utilization of a heating phenomenon of a rotary machine such as a motor for rotating the separation film rotating body.

## Claims

1. A vapor movement control device structured such that:
a first closed space to be humidity-controlled and a second closed space formed inside a casing are communicated through a first ventilation passage;
a separation film rotating body in which a plurality of tubular film bodies formed by film bodies having an air permeability and a humidity permeability and having different diameters are arranged on the same rotating axis is pivotally supported in said second closed space;
a plurality of small chambers and innermost spaces sectioned by the respective tubular film bodies are formed in the separation film rotating body, a sirocco fan promoting generation of a centrifugal force of the inward existing gas is mounted, and centrifugal fins are provided on the side surface thereof;
a heat transfer member transferring heat from the motor ,of the separation film rotating body to the separation film rotating body is provided;
the innermost space of said separation film rotating body is communicated with the first closed space through the second ventilation passage formed inside said rotating shaft; and
said second closed space is communicated with the outside air through an outside air ventilation passage.
